(19) Europäisches Patentamt
European Patent Office
Office européen des brevets

(11) EP 2 346 932 B1

(12) EUROPEAN PATENT SPECIFICATION

(45) Date of publication and mention
of the grant of the patent:
05.12.2018 Bulletin 2018/49

(51) Int Cl.:
C08J 9/00 (2006.01)     B29B 7/40 (2006.01)
B29B 7/46 (2006.01)     B29B 7/90 (2006.01)
C08J 3/20 (2006.01)

(21) Application number: 09756697.0

(22) Date of filing: 30.10.2009

(86) International application number:
PCT/EP2009/064398

(87) International publication number:
WO 2010/049530 (06.05.2010 Gazette 2010/18)

(54) **FOAMED PVC PROFILES WITH A HIGH MINERAL FILLER CONTENT AND THEIR USES**

VERSCHÄUMTE PVC-PROFILE MIT HOHEN GEHALTEN AN MINERALISCHEM FÜLLSTOFF UND IHRE VERWENDUNGEN

PROFILÉS EN PVC EXPANSÉ À TENEUR ÉLEVÉE EN CHARGE MINÉRALE ET UTILISATIONS DE CES PROFILÉS

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 31.10.2008 BE 200800595
31.10.2008 US 110292 P

(43) Date of publication of application:
27.07.2011 Bulletin 2011/30

(73) Proprietor: Eurocell Profiles, Ltd.
Alfreton
Derbyshire DE55 4RF (GB)

(72) Inventors:
• BUSSELS, Raf
B-3990 Peer (BE)
• GABRIELS, Joseph Philip
B-3980 Tessenderlo (BE)
• SPIJKERMAN, Christianus Johannes
NL-7552 CK Hengelo (NL)

(74) Representative: Paemen, Liesbet R.J. et al
De Clercq & Partners cvba
Edgard Gevaertdreef 10 a
9830 Sint-Martens-Latem (BE)

(56) References cited:
DE-A1- 3 817 509      US-A- 4 239 679
US-A- 4 368 284       US-A- 5 437 826
US-A1- 2007 078 191

## Description

### Technical field

The invention relates to foamed and reinforced PVC profiles and their uses.

### Background

Polyvinyl chloride polymer (PVC) is a synthetic material that can be applied in various industries because of its versatile physical and chemical characteristics. There is a demand for PVC panels for the replacement of wood and tiles in floor and wall coverings (decking and siding). For these applications it is not desirable that panels sag or expand when exposed to heat. At the same time, these profiles that are usually of large dimensions should be easy to install.

In US2007/0078191, siding was made of a PVC composition with a large quantity of glass fibres and a foaming agent. The use of large quantities of glass fibre is disadvantageous, since glass fibres are highly abrasive and consequently damage the metal machine parts. As a consequence, repairs and replacements must be carried out frequently. Damage to the die needed for the production of PVC profiles will cause a loss of dimensional stability and an increased rejection percentage. Because of the health risks linked to inhaling glass fibre dust, these fillers must be avoided.

The use of alternative reinforcing fibres, like synthetic (aramid or carbon fibres) or natural fibres (flax, wood), leads to a substantial increase in the cost of raw materials which would make a PVC profile not economically feasible. Moreover these fibres significantly hamper the processing of PVC. A further disadvantage of natural fibres, like for example wood fibre, is their changing composition and consequently their fluctuating quality. They are sensitive to humidity and consequently they can rot and mould, even when incorporated into a PVC profile. Moreover these fibres significantly hamper the processing of PVC.

Consequently there is a need for new PVC profiles. The purpose of this invention is to at least partially solve the problems mentioned above.

### Summary

For this purpose, the invention provides foamed PVC profiles with a high naturally occurring mineral filler content and a description of their use.

In a first aspect, the invention relates to profiles made of foamed polyvinyl chloride polymer comprising 80 to 120 weight parts of naturally occurring mineral filler for every 100 weight parts of polyvinyl chloride (PVC), and PVC with a K-value of 50-58, with the proviso that the profile does not comprise glass fibres.

In a second aspect, the invention relates to a method for obtaining a foamed profile according to the invention. In a third aspect, the invention further provides a granulate or foamed profile obtained with a method of the invention. Possible usages of these PVC profiles will be described in a further aspect.

In order to better show the characteristics of the invention, an illustration of some preferred embodiments but not limiting in nature, will be described below.

### Description of the invention

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The terms "comprising", "comprises" and "comprised of" also include the term "consisting of". The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

A foaming agent is used during the preparation, in order to obtain a PVC profile with a reduced density. In this invention, the term **"foaming agent"** has the meaning of a chemical substance that will form a gas when undergoing thermally induced decomposition. Polyvinyl chloride polymer is mixed with a foaming agent. This mixture is fed to an extruder as a raw material. The foaming agent and the raw material are heated in the extruder to a melt. The heating causes the decomposition of the foaming agent. Upon leaving the extruder the melt will experience a decrease in pressure and it expands.

Foaming is hindered more when the formulation is being reinforced. In this current invention, **"reinforced"** means that reinforcing materials are added to a preparation. A reinforced material is obtained as a result. A foaming agent is added to an extruder along with a reinforcing material. They can be dosed together or separately.

The inventors have been able to produce a reinforced foamed profile made of polyvinyl chloride polymer comprising at least 40 weight parts, preferably at least 60 weight parts of naturally occurring mineral filler for every 100 weight parts of polyvinyl chloride (PVC).

The term **"phr",** the way it is used in this invention, means **"parts per hundred resins".** Upon using this unit, 100 parts of polyvinyl chloride polymer are adopted, and the quantity of other ingredients is expressed in relation to this 100 parts of polyvinyl chloride polymer. In this current invention, the term "highly filled" means high contents of naturally occurring mineral filler. A profile is highly filled from 25 phr naturally occurring mineral filler on. The highly filled PVC profiles were of good quality, homogenous composition, without fillers bulging on the surface. They have not been hindered by mixing or foaming problems.

By the term **"naturally occurring mineral filler"** it is meant a filler which can be found in nature and except for a milling step can be used without the need for a manufacturing process. The denomination mineral indicates an element or chemical compound that is normally crystalline and that has been formed as a result of geological processes. Glass fibre production requires a manufacturing process, is not naturally occurring as it is produced from $SiO_2$. Wood fibres are not mineral.

In the current invention, **"naturally occurring mineral filler"** particularly means wollastonite, vermiculite, talc, mica and/or combinations thereof. In a preferred embodiment of the invention, the naturally occurring mineral filler in a profile is selected from a group including wollastonite, vermiculite, talc, mica, and/or combinations thereof. In a preferred embodiment of the invention, the naturally occurring mineral filler in a profile is talc and/or mica. If a stiff profile is desired, mica will have the preference. If a profile is desired with a reduced coefficient of linear thermal expansion, talc is most advantageous.

It is uncommon that substantial reinforcement can be obtained only with naturally occurring mineral filler, since generally it is assumed that fibrous materials must be used to obtain significant reinforcement. In the current invention the terms **"fibrous materials"** mean glass fibres, aramid fibres, carbon fibres and/or combinations thereof.

In a preferred embodiment, PVC is used with a K-value between 50 to 68. The **"K-value"** of a polymer is a measure of the molecular weight and it is based on the inherent viscosity. A K-value between 50 and 68 corresponds to an average molecular weight of about 40000-100000 g/mol. In a more preferred embodiment, the polyvinyl chloride polymer has a K-value between 50 and 60. In a most preferred embodiment according to the invention, the PVC has a K-value between 50 and 58. A K-value of 57 is advantageous for good workability and mechanical characteristics. PVC can be obtained commercially in granules or powder. The PVC can be used as scrap. By the term **"scrap"** recyclable PVC-based materials are meant that are the result of starting up or shutting down extrusion lines, or PVC-based materials that are out-of-specification. In a preferred embodiment, a method comprises extruding a formulation comprising at least 10 weight% scrap.

Therefore, the invention provides profiles made of foamed polyvinyl chloride polymer comprising 80 to 120 weight parts of naturally occurring mineral filler for every 100 weight parts of polyvinyl chloride (PVC), and PVC with a K-value of 50-58, with the proviso that the profile does not comprise glass fibres.

In a preferred embodiment, the naturally occurring mineral filler is talc and/or mica. Talc is a hydrated magnesium silicate, which has a chemical structural formula of $Mg_3Si_4O_{10}(OH)_2$. For its application, it is ground to a powder with an average granular dimension between 0.5 $\mu$m and 20 $\mu$m. It is commercially available. Mica should preferably be of the muscovite kind, this is a phyllosilicate mineral, with the following chemical structural formula $KAl_2(AlSi_3)O_{10}(OH,F)_2$. To use it, it is ground to a powder with an average granular dimension between 0.5 $\mu$m and 40 $\mu$m. It is commercially available. These minerals typically provide the PVC profiles with an improved fire resistance, a decreased coefficient of linear thermal expansion, and a higher stiffness. This is an interesting characteristic when used for building components. Therefore, the invention provides PVC profiles, wherein the naturally occurring mineral filler is talc and/or mica.

In a preferred embodiment, the naturally occurring mineral filler has an average grain size between 0.5 and 50 $\mu$m. In a more preferred embodiment, the naturally occurring mineral filler is talc and/or mica with an average grain size d50 between 0.5 and 3 $\mu$m for talc and between 30 and 35 $\mu$m for mica. Preferably the grains have an elongated shape and are platelets. Average grain size of naturally occurring mineral filler may be determined by measuring techniques known to a person skilled in the art. For example, the method as described in ISO 13320 may be used.

In a preferred embodiment, a profile has a coefficient of linear thermal expansion (CLTE) lower than $25 \times 10^{-6}$ mm/mm/K. In a more preferred embodiment, a profile has a coefficient of linear thermal expansion lower than $20 \times 10^{-6}$ mm/mm/K. In a most preferred embodiment, a profile has a coefficient of linear thermal expansion lower than $15 \times 10^{-6}$ mm/mm/K. The term **"coefficient of linear thermal expansion"** describes by how much a material will expand for each incremental change in temperature, as given by the formula:

$$\alpha = \frac{dl}{l_0 \times dT}$$

where:

dl = the change in length of material in the direction being measured
$l_0$ = initial length of material in the direction being measured
dT = the change in temperature over which dl is measured

Coefficients of linear thermal expansion can be measured by techniques known to a person skilled in the art. Coefficients of linear thermal expansion may for instance be determined with a silica dilatometer according to ASTM D 696 or ISO 11359. This characteristic of improved linear thermal expansion has the advantage of profiles being less subject to shrinking and expansion when exposed to different temperatures. This is advantageous in applications where high dimensional stability is required and where the profiles are exposed to weather conditions, for example exterior wall claddings, decking or shutters. Consequently the invention provides PVC profiles, with a coefficient of linear thermal expansion preferably lower than $25 \times 10^{-6}$ mm/mm/K, more preferably lower than $20 \times 10^{-6}$ mm/mm/K, most preferably lower than $15 \times 10^{-6}$ mm/mm/K.

In a preferred embodiment, a profile has a density, expressed in kg/l, below 1.0, preferably between 0.6 and 0.8, more preferably around 0.6. A low density is advantages for applications requiring lightweight construction, such as polymeric cladding of walls.

In a preferred embodiment, a profile is provided with a non-foamed outer body and a foamed inner body. Such a structure is advantageous for providing a light weight material. This property is of interest in applications where lightweight materials are used, such as the use of profiles as sidings. Unlike solid siding products a lightweight construction, due to lowered density and/or availability of small cavities, provides for easy installation. A one man installation operation is feasible.

In a preferred embodiment, a profile is made with raw material obtained by means of two mixing steps; each mixing step involves the mixing of PVC with a naturally occurring mineral filler and a temperature treatment. The mixing steps that are taken into consideration are classical preparation steps, like compounding, granulating and extruding. More information about these preparations can be found in textbooks, like for example PVC Handbook, Eds. Charles E. Wilkes, James W. Summers, and Charles A. Daniels, published by Hanser Gardner, 2005.

In a preferred embodiment, a quantity A of a naturally occurring mineral filler is mixed with PVC at a temperature lower than the melting temperature of the PVC in a first mixing step. In a second mixing step a quantity B of a naturally occurring mineral filler is mixed with the first mixture and a foaming agent in a concentration between 0.1 weight% and 5 weight% at a temperature higher than 180 °C.

Contrary to other substances, polyvinylchloride does not have one well-determined melting temperature but rather a melting range going from 130 °C to 240 °C. A **"temperature lower than the melting temperature"** of a polyvinylchloride polymer, means a temperature lower than 130 °C. In a preferred method according to the invention, the temperature during the second mixing step is preferably 185 °C, more preferably 190 °C, even more preferably 195 °C, most preferably 200 °C. In a more preferred embodiment according to the invention, during the second mixing step a PVC profile is obtained by extruding preferably at a temperature of 185 °C, more preferably at 190 °C, more preferably 200 °C and most preferably at 195 °C.

The foaming agent is used after a first reinforcement has been carried out. The filler used during the first mixing step can be different from the filler used during the second mixing step. The foaming agent added to decrease the density of the reinforced PVC profile, can be a sodium (bi)carbonate, azodicarbonamide or OBSH (p,p'-oxybis (benzenesulfonyl)hydrazide) type. An azodicarbonamide should preferably be used because of the good price performance balance. The foaming agent can be dosed to the extruder together with the naturally occurring mineral filler or separately. The advantage of this preparation is that the homogeneity will be preserved, so that problems like segregation and quality loss are reduced. Therefore, the invention provides profiles with the characteristic that the raw material for the profile is obtained by means of two mixing steps for mixing the PVC with the naturally occurring mineral filler. Preferably the naturally occurring mineral filler is talc and/or mica. More preferably the naturally occurring mineral filler is talc. Most preferably the naturally occurring mineral filler is talc with an average grain size d50 between 0.5 and 20 μm.

The advantage of this preparation is that the quantity of the filler can be increased without compromising the processability. The resulting profiles are of good quality. For example, the profiles show a smooth and homogenous surface, without parts of the filler protruding on the surface. The use of naturally occurring mineral filler instead of fibres has the advantage that it is cheaper and more readily available. Glass fibres are abrasive, consequently damaging machine parts. If the cylinder of an extruder is damaged or the profile die is scratched, then the dimensional stability of the produced profiles will decrease and there will be higher repair and failure expenses. Therefore, the invention provides profiles prepared with a method wherein in the first mixing phase a quantity A of naturally occurring mineral filler is mixed with PVC at a temperature lower than the PVC melting temperature; and during the second mixing phase a quantity B of naturally occurring mineral filler is mixed with the first mixture and a foaming agent with a concentration between 0.1-5 weight%, at a temperature higher than 180 °C.

In a preferred embodiment, a method for obtaining a foamed profile according to the invention, comprises the steps of:

a) preparation of a pre-reinforced polymer by mixing polyvinyl chloride polymer with a quantity A of a naturally occurring mineral filler and with between 0.1 weight% and 5 weight% of a foaming agent, at a temperature lower than the melting temperature of the polyvinyl chloride polymer,
b) mixing the pre-reinforced polymer obtained under a) with a quantity B of a naturally occurring mineral filler at a temperature higher than 180°C to obtain a reinforced polyvinyl chloride polymer,
c) optionally granulating the reinforced polyvinyl chloride polymer obtained in step b),
d) pressing the reinforced polymer obtained in step b) or the granulate obtained in step c) through a die to obtain said foamed profile.

In another preferred embodiment, a method for obtaining a foamed profile according to the invention, comprises the steps of:

a) preparation of a pre-reinforced polymer by mixing polyvinyl chloride polymer with a quantity A of a naturally occurring mineral filler at a temperature lower than the melting temperature of the polyvinyl chloride polymer,
b) mixing the pre-reinforced polymer obtained under a) with a quantity B of a naturally occurring mineral filler and with between 0.1 weight% and 5 weight% of a foaming agent, at a temperature higher than 180°C to obtain a reinforced polyvinyl chloride polymer,
c) optionally granulating the reinforced polyvinyl chloride polymer obtained in step b),
d) pressing the reinforced polymer obtained in step b) or the granulate obtained in step c) through a die to obtain said foamed profile.

In another preferred embodiment, a method for obtaining a foamed profile according to the invention, comprises the steps of:

a) preparation of a pre-reinforced polymer by mixing polyvinyl chloride polymer with a quantity A of a naturally occurring mineral filler at a temperature lower than the melting temperature of the polyvinyl chloride polymer,
b) mixing the pre-reinforced polymer obtained under a) with a quantity B of a naturally occurring mineral filler at a temperature higher than 180°C to obtain a reinforced polyvinyl chloride polymer,
c) granulating the reinforced polyvinyl chloride polymer obtained in step b),
d) mixing the granulate obtained in step c) with between 0.1 weight% and 5 weight% of a foaming agent, and pressing this mixture through a die at a temperature higher than 180°C to obtain said foamed profile.

In a preferred embodiment the quantity A of a naturally occurring mineral filler used in a method to obtain a foamed profile according to the invention is between 2-25 phr, or between 25-40 per hundred parts of polyvinyl chloride polymer (phr). In a production environment where the processing equipment is in close proximity of the mixer, a quantity A between 25-40 phr is advantageous, since there is little transport. For situations with an average requirement for transportation, a quantity A between 2-25 phr is advantageous. In a preferred embodiment, a highly filled compound is formed by using at least 25 weight parts of naturally occurring mineral filler, during the first step.
In a preferred embodiment, a high filled compound is formed during the first step by using at least 10 weight parts of naturally occurring mineral filler. In a more preferred embodiment, a highly filled compound is formed during the first step by using at least 30 weight parts of naturally occurring mineral filler. In a more preferred embodiment, at least 40 weight parts of naturally occurring mineral filler will be used during the first step. A pre-reinforced polymer will be formed by heating at a temperature lower than the PVC melting temperature. The foaming agent will only be added with the addition of the second quantity of filler. It can be dosed to the extruder together with the filler. No hindrances are experienced when foaming. The advantage is that dimensionally stable foamed profiles are obtained. Therefore, the invention provides PVC profiles wherein preferably at least 10 weight parts, more preferably at least 30 weight parts, most preferably at least 40 weight parts of naturally occurring mineral filler are used during the first mixing step.

In a preferred embodiment the total quantity of filler expressed in weight%, amounts up to 70 weight% of the reinforced polyvinyl chloride polymer. The deployability of larger quantities of filler offers more possibilities for giving direction to the characteristics of the product, for example the reduction of the coefficient of linear thermal expansion.

The total number of filler parts (A+B) with regards to the number of polyvinyl chloride polymer parts, is between 0.8 and 1.2. The total quantity of naturally occurring mineral filler (A+B) with regards to the quantity of polyvinyl chloride polymer is between 0.8 and 1.2. The advantage of this ratio is that there will be enough polymer in relation to the filler for complete melting and mixing in the extruder, the consequence of which will be a homogenous mixture.

In a preferred embodiment, a PVC profile contains at least one additive, selected from a group comprising heat stabilizers, lubricants, processing aids, toughening agents, foaming agents, light stabilizers and colouring agents. In a preferred embodiment according to the invention, a formulation comprises a heat stabilizer, a lubricant and a processing aid and requires no further additives.

In a preferred embodiment, a heat stabilizer is selected from a group of stabilizers of the CaZn, Ca-organic, Sn, or Pb type. The CaZn types are calcium-zinc systems based on calcium and zinc salts of fatty acids in combination with costabilizers. The Ca-organic types are stabilizers based on calcium salts of fatty acids in combination with costabilizers. Sn types are stabilizers based on organic stannous compounds. The Pb types are stabilizers based on (in)organic lead salts. A heat stabilizer ensures the delay of the dehydrochlorination process of polyvinyl chloride and it prevents the polyvinyl chloride from burning during a thermal treatment, like an extrusion. For applications in Europe there is a preference for CaZn and Ca-organic stabilizers, whereas for applications in North America Sn stabilizers are preferred. The reasons for this are historic. North America has always preferred Sn stabilizers, whereas Europe has always preferred Pb stabilizers. Since Pb stabilizers will disappear (at the latest in 2015) the preference in Europe goes to CaZn and Ca-organic.

In another preferred embodiment, a heat stabilizer is of the blocked thiol type. By the term **"blocked thiol"** it is meant a thiol of formula B-S-R wherein B and R represent an organic portion. Blocked thiol and organic-based heat stabilizer are used interchangeably. An organic-based heat stabilizer comprises a zinc salt, and at least one sulphur compound selected from the group consisting of a free mercaptan, a zinc mercaptide, and a latent mercaptan. Preferably the organic-based heat stabilizer is an organic-based composition comprising at least one organic-based heat stabilizer component, and at least one stabilizer modifying component selected from the group consisting of liquid calcium soap and 1,3,5-tris (2-hydroxyethyl) cyanuric acid; wherein the organic based heat stabilizer component comprises a zinc salt and at least one sulfur compound selected from the group consisting of a free mercaptan, a zinc mercaptide, and a latent mercaptan; and wherein the liquid calcium salt is a solution of a calcium salt which is liquid at 105 °C and is free from other metal salts.

Use of a blocked thiol type stabilizer system is advantageous as it is essentially free of heavy metals and harmful bisphenol A co-stabilizer. It is an environmentally friendly type of stabilizer. A further advantage is that this type of stabilizer boosts recyclability. PVC stabilized with a blocked thiol type heat stabilizer is compatible with other stabilizing systems such as the CaZn, Ca-organic, Sn, or Pb type stabilizers. It can be safely combined with recycled PVC. It provides good colour stability in PVC profiles. In an embodiment of the invention, a profile comprises an organic based thermal stabilizer. In a further embodiment of the invention, a profile comprising up to 10 weight%, preferably up to 25 weight% recycled PVC, comprises a blocked thiol type stabilizer.

In a preferred embodiment, the total quantity of stabilizers in a formulation is between 1 and 4 weight%, more preferably between 2 and 4 weight%, most preferably between 3 and 4 weight%. In a more preferred embodiment of the invention, the total quantity of stabilizers in a formulation is maximum 1.5 weight% in case Sn type stabilizers are used, 5 weight% when Pb type stabilizers are used, 2-4 weight% when using CaZn or Ca organic type stabilizers, 4 weight% when a blocked thiol type is used.

In a preferred embodiment, a method for obtaining a foamed profile according to the invention further comprises the step of adding a thermal stabilizer in a quantity of between 0 and 5 weight%; preferably between 1 and 4 weight%; most preferably around 4 weight%, wherein said thermal stabilizer is preferably a blocked thiol type stabilizer.

An additive can also be a lubricant, for example to improve the flow of the melt in the extruder. In a preferred embodiment, a lubricant is selected from a group comprising polyethylene waxes, oxidized polyethylene waxes, paraffin waxes, fatty acid ester waxes (for example distearyl phthalate), fatty acids salts (for example calcium stearate), fatty acids, fatty acids alcohols, amine waxes and/or their combinations. In a preferred embodiment, the total quantity of lubricants in a formulation is between 0 and 2 weight%, more preferably between 1 and 2 weight%, most preferably between 1.5 and 2 weight%.

In a preferred embodiment, a processing aid is selected from a group comprising methacrylate copolymers, acrylate copolymers, methacrylate terpolymers, acrylate terpolymers and/or a combination thereof. In a preferred embodiment, the total quantity of processing aid in a formulation is between 0 and 15 weight%, more preferably between 5 and 15 weight%, most preferably between 10 and 15 weight%. This use supports, for example, the processability of a polymer by promoting fusion, improving melting strength, changing the surface characteristics, ensuring an improved release of the melt from metal parts.

In a preferred embodiment a method for obtaining a foamed profile according to the invention further comprises the step of adding a processing aid in a quantity of between 0 and 15 weight%, preferably between 5 and 15 weight%.

In order to improve the impact resistance of a PVC profile, a toughening agent can be added. In a preferred embodiment, the total quantity of toughening agents in a formulation is between 0 and 5 weight%, more preferably between 1 and 5 weight%, most preferably between 2 and 5 weight%.

A light stabilizer can be added in order to slow down the PVC degradation due to exposure to light. In a preferred embodiment, a light stabilizer is selected from a group comprising a stabilizer of the titanium dioxide type, of the benzotriazole type, or of the 2-hydroxybenzophenone type and/or combinations thereof. Titanium dioxide is used in a more preferred embodiment according to the invention. In the most preferred embodiment, the total quantity of light stabilizers in a formulation is preferably between 0 and 10 weight%, more preferably between 8 and 4 weight%, most preferably between 4 and 6 weight%.

A foamed profile according to the invention can be fit with a covering layer or cap. The material for the cap layer is selected from a group comprising poly((meth))acrylate), poly(butyl acrylate-styrene-acrylonitrile), polyvinylidene fluoride, polyvinyl fluoride, poly(styrene-acrylonitrile), a light proof polyvinyl chloride material and/or a combination thereof. In a preferred embodiment according to the invention, the total quantity of additive for the covering layer in a formulation is preferably between 0 and 6 weight%, more preferably between 0 and 4 weight%, most preferably between 0 and 2 weight%.

If no cap is extruded over a PVC profile, a profile will be coloured by means of a colouring agent. In a preferred embodiment, a colouring agent will be selected from a group comprising metal salt, metal oxide, mixed metal oxide and/or combinations thereof. In a more preferred embodiment, a mixed metal oxide is used. This shows the most favourable ageing behaviour. In a preferred embodiment, the total quantity of colouring agents in a formulation is between 0 and 5 weight%, more preferably between 1 and 4 weight%, most preferably between 2 and 3 weight%.

It is further disclosed a reinforced polyvinylchloride polymer based on a formulation which is not part of the invention comprising:

- polyvinylchloride polymer in a quantity preferably included between 30 and 70, more preferably between 35 and 70, most preferably between 40 and 70 weight% of the formulation; and
- a naturally occurring mineral filler in a quantity preferably included between 30 and 70 weight%, more preferably between 35 and 70 weight%, most preferably between 40 and 70 weight% of the formulation.

A reinforced polyvinylchloride polymer is based on a formulation which is not part of the invention comprising:

- polyvinylchloride polymer in a quantity of at least 30 weight%, preferably at least 35 weight%, more preferably at least 40 weight%, most preferably at least 45 weight% of the formulation; and
- a naturally occurring mineral filler in a quantity of at least 30 weight%, preferably at least 35 weight%, more preferably at least 40 weight%, most preferably at least 45 weight% of the formulation.

A further reinforced polyvinylchloride polymer is based on a formulation which is not part of the invention comprising:

- polyvinylchloride polymer in a quantity of at least 30 weight%, preferably at least 35 weight%, more preferably at least 40 weight%, most preferably at least 45 weight% of the formulation; and
- a naturally occurring mineral filler in a quantity of at least 30 weight%, preferably at least 35 weight%, more preferably at least 40 weight%, most preferably at least 45 weight% of the formulation; whereby said filler is talc and/or mica, preferably talc.

A polyvinyl chloride polymer based on a formulation has increased naturally occurring mineral filler contents. This highly filled polyvinylchloride polymers are more reinforced, have increased fire resistant characteristics, increased rigidity and increased stiffness.

In a further aspect, the invention provides a granulate obtained according to a method as previously described. In a further aspect, the invention provides a kit of parts comprising a granulate according to the invention and a foaming agent. Another further aspect of the invention discusses the uses of the PVC profiles.

According to an embodiment of the invention, profiles are preferably used as panels. In a preferred embodiment the profiles are used in floor or wall covering, like for example in terrace floors or for wall cladding (siding). Traditionally outside floors, for example terraces, are covered with tiles, wooden boards or wood-plastic composite boards. The façade of houses is traditionally sided with brick, stucco, wood, PVC or aluminium. The advantage of the replacement of traditional building materials with a cladding board according to the invention is that the panel is not affected by humidity, decay, moulds and fading when exposed to the sunlight and weather. Moreover, a panel according to the invention is light but strong. It is significantly less sensitive to deformation when exposed to heat than traditional materials. Since it will expand/shrink less, the panels will not become curved. Under weight strain, the panels sag less. The panels can be easily maintained. They have an improved insulation value, compared with non-foamed panels. When used as wall cladding, this will give extra insulation. PVC profiles according to a preferred embodiment of the invention do not bend because of an increase in temperature. This makes PVC profiles suitable for interior and exterior use, preferably in floor decking or façade siding. PVC profiles according to a preferred embodiment of the invention are solid, light and well insulating materials. PVC profiles according to a preferred embodiment of the invention are recyclable. Therefore, the invention provides a use according to a preferred embodiment, as a panel preferably in a floor or wall coverings.

In a preferred embodiment, a panel is provided with a closing mechanism, preferably in the form of a tongue and a groove, where the tongue and groove form a connection for the joining together of the profiles. This allows an easier manipulation and placing. Therefore, the invention provides the use of a panel with a closing mechanism, preferably in a form of a tongue and a groove, where the tongue and groove form a connection to join the profiles together.

PVC profiles according to a preferred embodiment of the invention are easily workable. They can be worked with standard carpenter tools like a saw or a drill. They can be nailed or attached without cracking or splintering of the profile. Use of clips or brackets can be avoided. Furthermore, profiles free of glass fibre have the advantage that no harmful silica dust is created in cutting.

A profile according to the invention has the advantage that it can be provided with a hammer guide and can be hard-nailed right through the hammer guide for secure attachment to a wall so as to provide sidings. The nailing process can be accelerated using a nail gun. In a preferred embodiment of a use according to the invention, the panel is attached to a surface such as a floor or wall using a nail, preferably using a nail gun.

In a preferred embodiment a panel is a horizontal lamella of a shutter. In this current invention, **"shutter"** means a window, door or fence with panels, that contain corner panels so that light and air are allowed in, but direct sunlight and rain are kept outside. The corner is usually set when panels are mounted in a window, door or fence but it can also be adjustable. Consequently, the invention provides the use of a panel as a lamella in a shutter. The panels according to the invention are light but still strong and tough, so that a strong and light construction is formed when they are used as a thin plate in a shutter, so that, for example, a window shutter can be lifted and mounted easily.

Profiles according to the invention are more easily alignable against an outer wall of a building. The provision of a spacing between to panels to allow for expansion and/or shrinkage of the panels may be avoided.

It is obvious that the description of this invention can be related to alternative embodiments within its scope. The invention is illustrated based on the following non-limiting examples.

PVC Profiles

Examples 1-6 (reference examples, not part of the invention)

Profiles can be based on compositions like those represented in Tables 1 and 2.

To produce a batch quantity of 100 kg, the following quantities were put in a hot-mixer, of the Periplast brand, having a volume of 150 litres: 100 parts of polyvinyl chloride polymer, 1.5 parts of Sn stabilizer, 1.9 parts of lubricant, 12 parts of processing aid and 25 to 60 parts of talc. The ingredients were mixed by means of a stirrer with a blade tip speed of 38 m/s. The mantle temperature was 80 °C. Upon reaching the temperature of 120 °C, the mixture was discharged into a cold mixer of the Periplast brand, with a volume of 800 litres. The mixture was stirred with a blade tip speed of 6 m/s. In order to cool the mixture, the mantle temperature was set to 10 °C. The mixture was cooled until a discharge temperature of 40 °C was reached.

Table 1: Compositions for producing PVC profiles for façade covering (examples 1 and 2 are reference examples)

| | Example1 | Example 2 |
|---|---|---|
| *Formulation* | (phr) | (phr) |
| PVC K-value 57 | 100 | 100 |
| Sn stabilizer | 1.5 | 1.5 |
| Lubricant | 1.9 | 1.9 |
| Processing aid | 12 | 12 |
| Talc (d50 = 1.9 $\mu$m) | 25+35 (*) | |
| Mica (d50 = 33 $\mu$m) | | 25 + 35 (*) |
| Foaming agent | 1.5 % (**) | 1.5 % (**) |
| (*) 25 phr added to the heat mixer, 35 parts added on the extruder. (**) Added on the extruder. | | |

Table 2: Composition for producing PVC profiles for terrace floors (decking) or for (roll-down) shutters (examples 3 and 4 are reference examples).

| | Example 3 | Example 4 |
|---|---|---|
| *Formulation* | (phr) | (phr) |
| PVC K-value 57 | 100 | 100 |
| Sn stabilizer | 1.5 | 1.5 |
| Lubricant | 1.9 | 1.9 |
| Light stabilizer | | 9 |
| Processing aid | 12 | 12 |
| Toughening agent | 6 | 6 |
| Talc (d50 = 1.9 μm) | 40 + 20 (*) | 40 + 20 (*) |
| Foaming agent | 2 (**) | 2 (**) |
| ASA cap | Coextruded | |
| (*) 40 phr added to the heat mixer, 20 parts added on the extruder. (**) Added on the extruder. | | |

The pre-reinforced polymer obtained in this way, was brought into a dosing unit of a counter-rotating parallel double-screw extruder of the Bandera brand. A foaming agent in a concentration of 1.5-2 weight% was added. 6 parts of toughening agent were added to produce covering and shutters (example 3 and 4). In example 4, 9 parts of light stabilizers were also added. The mixture that was obtained in this way was processed in the extruder to form granulate or to directly form a profile with a die. A typical example of a direct profile extrusion (example 5) is reproduced in Table 3. The composition of example 3 resulted in a profile with a covering layer applied by means of co-extrusion.

Table 3: A typical example of a profile extrusion of a direct profile extrusion (example 5 is a reference example).

| | Example 5 |
|---|---|
| Type | Counter-rotating parallel double-screw extruder |
| Brand | Bandera |
| *Dosing unit* | |
| Dosing unit 1 | 58 kg/h (compound) |
| Dosing unit 2 (filler) | 30 kg/h |
| Filler quantity in compound | 25-60 phr |
| Additionally dosed filler | Addition to 60 phr |
| Dosing method | Both flows through the same feed throat |
| *Extruder* | |
| Screw diameter | 66 mm |
| Screw length | 20D (*) |
| Cylinder temperature zone 1 | 185 °C |
| Cylinder temperature zone 2 | 190 °C |
| Cylinder temperature zone 3 | 190 °C |
| Cylinder temperature zone 4 | 190 °C |
| Cylinder temperature zone 5 | 195 °C |
| Temperature adapter zone 1 | 185 °C |

(continued)

|  | Example 5 |
|---|---|
| Temperature adapter zone 2 | 190 °C |
| Temperature die zone 1 | 200 °C |
| Temperature die zone 2 | 200 °C |
| Temperature die zone 3 | 200 °C |
| Temperature die zone 4 | 200 °C |
| Screw temperature | 140 °C |
| Screw speed | 18 rpm |
| Vacuum degassing | Yes |
| Yield | 88 kg/h |
| (*) 20D = 20x screw diameter | |

Example 5: preparation of sidings

Sidings as described by Example 5 were prepared. To produce a batch quantity of 100 kg, the ingredients as listed in Table 4 were used. PVC with K-value 57, titanium dioxide, tin based stabiliser, lubricants and processing aids were loaded into a hot-mixer at room temperature. These ingredients were mixed by means of a stirrer with a blade tip speed of 38 m/s. The mantle temperature of the hot-mixer was set to warm up the mix of ingredients in the heat mixer. Upon reaching 80 °C in the mixture a first amount A of talc was added to the heat mixer and mixing continued. Upon reaching a temperature of 120 °C, the mixture was transferred to a cold-mixer. The mixture was stirred with a blade tip speed of 6 m/s. In order to cool the mixture, the mantle temperature of the cold-mixer was set at 15 °C. The mixture was cooled until the mixture reached a temperature of 40 °C.

Table 4: Composition for producing PVC profiles for sidings.

| Ingredient | Amount (weight %) |
|---|---|
| PVC K-value 57 | 46.7 |
| Talc(hot-mixer) | 4.7 (Amount A) |
| Talc (online) | 29.9 (Amount B) |
| Sn type stabilizer | 0.7 |
| Additives | 9.4 |
| Foaming agent ADC (online) | 2.9 |
| Capstock (coextrusion) | 5.7 |

The compound thus obtained was transported via a transportation conduit to the main dosing installation (hopper+feeder) of an extruder. The extruder was a counter-rotating conical double-screw extruder of the Krauss-Maffei KM60 type. From this hopper the compound flowed to the screws of the extruder. By means of a second dosing installation (hopper+feeder) on the extruder, the remainder of talc, amount B, was added. By means of two additional dosing stations the foaming agent and the pigment were added on-line. All material flows came together on the extruder screws. The conditions used for the extruder were as listed in Table 5.

On the screws of the extruder the compound was heated above the melting temperature of the PVC. The material melted and an intensive mixing took place. The foaming agent decomposed chemically to inert gas (nitrogen, $CO_2$). Due to the high melt pressure these gassed remain dissolved in the melt. The melt is transported by means of the screws of the extruder to the die. The melt flow is pushed through the die which has an opening in the shape of the desired profile. Upon leaving the die, pressure falls. The inert gasses of the foaming agent no longer remain dissolved in the melt and a foamed structure forms.

By means of a second extruder (co-extruder), the capstock was melted and brought to the die of the main extruder. In the die the capstock formed a thin UV-stable acrylic coating layer on top of the profile. After leaving the die the foamed and coated melt went to a calibration and cooling installation where the melt was brought to its precise dimensions and cooled.

Pieces with a desired length were obtained by sawing parts of a desired length off the extruded product. This provides foamed and reinforced PVC elements for use as siding profiles. In a final step the profiles went through an embossing installation were a wood structure is pressed on the upper side of the profiles by means of an embossing roller. The siding profiles are ready for use. They can be installed onto the walls of a house by nailing.

Table 5: Extruder conditions

| Zone | Temperature (°C) |
|---|---|
| Cylinder zone 1 | 179 |
| Cylinder zone 2 | 179 |
| Cylinder zone 3 | 182 |
| Cylinder zone 4 | 182 |
| Adapter zone 1 | 174 |
| Die 1 | 177 |
| Die 2 | 177 |
| Die 3 | 177 |
| Die 4 | 185 |

Characteristics of PVC profiles

The characteristics of PVC profiles are represented in Table 6.

Table 6: Characteristics of PVC profiles

| Example (No.) | 6 |
|---|---|
| CLTE (x $10^{-6}$ mm/mm/K) | 11 |
| Flexural modulus (GPa) | 2.5 |

**Claims**

1. Profile made of foamed polyvinyl chloride polymer comprising 80 to 120 weight parts of naturally occurring mineral filler for every 100 weight parts of polyvinyl chloride (PVC), and PVC with a K-value of 50-58, with the proviso that the profile does not comprise glass fibers.

2. Profile according to claim 1, wherein said naturally occurring mineral filler is selected from a group including wollastonite, vermiculite, talc, mica, and/or combinations thereof.

3. Profile according to claim 1 or 2, wherein said naturally occurring mineral filler is talc and/or mica.

4. Profile according to claim 3, wherein said naturally occurring mineral filler has an average grain size between 0.5 and 50 $\mu$m; said talc preferably has an average grain size d50 between 0.5 and 5 $\mu$m and said mica has an average grain size d50 between 30 and 35 $\mu$m.

5. Profile according to any of claims 1-4, with a coefficient of linear thermal expansion (CLTE) lower than 25 x $10^{-6}$ mm/mm/K, preferably lower than 15 x $10^{-6}$ mm/mm/K.

6. Profile according to any of claims 1-5, wherein said profile has a density, expressed in kg/l, below 1.0, preferably between 0.6 and 0.8, more preferably around 0.6.

7. Profile according to any of claims 1-6, wherein said profile is provided with a non-foamed outer body and a foamed inner body.

8. Method for obtaining a profile made of foamed polyvinyl chloride polymer comprising naturally occurring mineral filler and PVC with a K-value of 50-58, comprising the steps of:

    a) preparation of a pre-reinforced polymer by mixing polyvinyl chloride polymer with a quantity A of a naturally occurring mineral filler and with between 0.1 weight% and 5 weight% of a foaming agent, at a temperature lower than the melting temperature of the polyvinyl chloride polymer,
    b) mixing the pre-reinforced polymer obtained under a) with a quantity B of a naturally occurring mineral filler at a temperature higher than 180°C to obtain a reinforced polyvinyl chloride polymer,
    c) optionally granulating the reinforced polyvinyl chloride polymer obtained in step b),
    d) pressing the reinforced polymer obtained in step b) or the granulate obtained in step c) through a die to obtain said foamed profile;

    wherein the total quantity of naturally occurring mineral filler (A+B) to the quantity of polyvinyl chloride polymer is between 0.8 and 1.2 by weight;
    with the proviso that the profile does not comprise glass fibers.

9. Method for obtaining a profile made of foamed polyvinyl chloride polymer comprising naturally occurring mineral filler and PVC with a K-value of 50-58, comprising the steps of:

    a) preparation of a pre-reinforced polymer by mixing polyvinyl chloride polymer with a quantity A of a naturally occurring mineral filler at a temperature lower than the melting temperature of the polyvinyl chloride polymer,
    b) mixing the pre-reinforced polymer obtained under a) with a quantity B of a naturally occurring mineral filler and with between 0.1 weight% and 5 weight% of a foaming agent, at a temperature higher than 180°C to obtain a reinforced polyvinyl chloride polymer,
    c) optionally granulating the reinforced polyvinyl chloride polymer obtained in step b),
    d) pressing the reinforced polymer obtained in step b) or the granulate obtained in step c) through a die to obtain said foamed profile

    wherein the total quantity of naturally occurring mineral filler (A+B) to the quantity of polyvinyl chloride polymer is between 0.8 and 1.2 by weight;
    with the proviso that the profile does not comprise glass fibers.

10. Method for obtaining a profile made of foamed polyvinyl chloride polymer comprising naturally occurring mineral filler and PVC with a K-value of 50-58, comprising the steps of:

    a) preparation of a pre-reinforced polymer by mixing polyvinyl chloride polymer with a quantity A of a naturally occurring mineral filler at a temperature lower than the melting temperature of the polyvinyl chloride polymer,
    b) mixing the pre-reinforced polymer obtained under a) with a quantity B of a naturally occurring mineral filler at a temperature higher than 180°C to obtain a reinforced polyvinyl chloride polymer,
    c) granulating the reinforced polyvinyl chloride polymer obtained in step b),
    d) mixing the granulate obtained in step c) with between 0.1 weight% and 5 weight% of a foaming agent, and pressing this mixture through a die at a temperature higher than 180°C to obtain said foamed profile wherein the total quantity of naturally occurring mineral filler (A+B) to the quantity of polyvinyl chloride polymer is between 0.8 and 1.2 by weight;

    with the proviso that the profile does not comprise glass fibers.

11. Method according to any of claims 8-10, **characterized in that** said quantity A is between 2 and 25 or between 25 and 40 parts per hundred parts of the polyvinyl chloride polymer (phr).

12. Method according to any of claims 8-11, further comprising the step of adding a processing aid in a quantity of between 5 and 15 weight%.

13. Method according to any of claims 8-12, further comprising the step of adding a thermal stabilizer in a quantity of between 1 and 4 weight%; most preferably around 4 weight%, wherein said thermal stabilizer is preferably a blocked thiol type stabilizer.

14. Granulate obtained in step c) of the method according to any of claims 8-13.

15. Kit of parts comprising granulate obtained in step c) of the method according to claim 10 and a foaming agent.

16. Use of a profile according to any of the claims 1-7 as a panel, preferably in a floor or wall covering or shutter.

17. Use of a profile according to claim 16, wherein said panel is attached to a surface such as a floor or wall using a nail, preferably using a nail gun.

18. Use of a profile according to claim 16, wherein said panel is provided with a closing mechanism, preferably in the form of a tongue and groove where the tongue and the groove make up a connection to join profiles together.

**Patentansprüche**

1. Profil, das aus geschäumtem Polyvinylchloridpolymer hergestellt ist, umfassend 80 bis 120 Gewichtsteile natürlich vorkommenden Mineralfüllstoff je 100 Gewichtsteile Polyvinylchlorid (PVC), und PVC mit einem K-Wert von 50-58, mit der Maßgabe, dass das Profil keine Glasfasern umfasst.

2. Profil nach Anspruch 1, wobei der natürlich vorkommende Mineralfüllstoff aus einer Gruppe ausgewählt ist, die Wollastonit, Vermiculit, Talkum, Glimmer und/oder Kombinationen davon enthält.

3. Profil nach Anspruch 1 oder 2, wobei der natürlich vorkommende Mineralfüllstoff Talkum und/oder Glimmer ist.

4. Profil nach Anspruch 3, der natürlich vorkommende Mineralfüllstoff eine durchschnittliche Korngröße zwischen 0,5 und 50 $\mu$m aufweist; wobei der Talkum bevorzugt eine durchschnittliche Korngröße d50 zwischen 0,5 und 5 $\mu$m aufweist und der Glimmer eine durchschnittliche Korngröße d50 zwischen 30 und 35 $\mu$m aufweist.

5. Profil nach irgendeinem der Ansprüche 1-4 mit einem linearen Wärmeausdehnungskoeffizienten (CLTE) unter 25 x $10^{-6}$ mm/mm/K, bevorzugt unter 15 x $10^{-6}$ mm/mm/K.

6. Profil nach irgendeinem der Ansprüche 1-5, wobei das Profil eine Dichte, in kg/l ausgedrückt, unter 1,0, bevorzugt zwischen 0,6 und 0,8, noch bevorzugter von etwa 0,6 aufweist.

7. Profil nach irgendeinem der Ansprüche 1-6, wobei das Profil mit einem nichtgeschäumten äußeren Körper und einem geschäumten inneren Körper ausgestattet ist.

8. Verfahren zum Erhalten eines Profils, das aus geschäumtem Polyvinylchloridpolymer hergestellt ist, umfassend einen natürlich vorkommenden Mineralfüllstoff und PVC mit einem K-Wert von 50-58, umfassend die Schritte des:

   a) Herstellens eines vorverstärkten Polymers durch Mischen von Polyvinylchloridpolymer mit einer Menge A eines natürlich vorkommenden Mineralfüllstoffs und mit 0,1 Gew.-% bis 5 Gew.-% eines Schäummittels bei einer Temperatur unterhalb der Schmelztemperatur des Polyvinylchloridpolymers,
   b) Mischens des unter a) erhaltenen vorverstärkten Polymers mit einer Menge B eines natürlich vorkommenden Mineralfüllstoffs bei einer Temperatur über 180 °C, um ein verstärktes Polyvinylchloridpolymer zu erhalten,
   c) wahlweise Granulierens des in Schritt b) erhaltenen verstärkten Polyvinylchloridpolymers,
   d) Drückens des in Schritt b) erhaltenen verstärkten Polymers oder des in Schritt c) erhaltenen Granulats durch eine Düse, um das geschäumte Profil zu erhalten;

   wobei die Gesamtmenge an natürlich vorkommendem Mineralfüllstoff (A + B) zu der Menge an Polyvinylchloridpolymer zwischen 0,8 und 1,2, auf das Gewicht bezogen, liegt;
   mit der Maßgabe, dass das Profil keine Glasfasern umfasst.

9. Verfahren zum Erhalten eines Profils, das aus geschäumtem Polyvinylchloridpolymer hergestellt ist, umfassend natürlich vorkommenden Mineralfüllstoff und PVC mit einem K-Wert von 50-58, umfassend die Schritte des:

   a) Herstellens eines vorverstärkten Polymers durch Mischen von Polyvinylchloridpolymer mit einer Menge A eines natürlich vorkommenden Mineralfüllstoffs bei einer Temperatur unterhalb der Schmelztemperatur des Polyvinylchloridpolymers,

b) Mischens des unter a) erhaltenen vorverstärkten Polymers mit einer Menge B eines natürlich vorkommenden Mineralfüllstoffs und mit 0,1 Gew.-% bis 5 Gew.-% eines Schäummittels bei einer Temperatur über 180 °C, um ein verstärktes Polyvinylchloridpolymer zu erhalten,

c) wahlweise Granulierens des in Schritt b) erhaltenen verstärkten Polyvinylchloridpolymers,

d) Drücken des in Schritt b) erhaltenen verstärkten Polymers oder des in Schritt c) erhaltenen Granulats durch eine Düse, um das geschäumte Profil zu erhalten;

wobei die Gesamtmenge an natürlich vorkommendem Mineralfüllstoff (A + B) zu der Menge an Polyvinylchloridpolymer zwischen 0,8 und 1,2, auf das Gewicht bezogen, liegt;

mit der Maßgabe, dass das Profil keine Glasfasern umfasst.

10. Verfahren zum Erhalten eines Profils, das aus geschäumtem Polyvinylchloridpolymer hergestellt ist, umfassend natürlich vorkommenden Mineralfüllstoff und PVC mit einem K-Wert von 50-58, umfassend die Schritte des:

a) Herstellens eines vorverstärkten Polymers durch Mischen von Polyvinylchloridpolymer mit einer Menge A eines natürlich vorkommenden Mineralfüllstoffs bei einer Temperatur unterhalb der Schmelztemperatur des Polyvinylchloridpolymers,

b) Mischens des unter a) erhaltenen vorverstärkten Polymers mit einer Menge B eines natürlich vorkommenden Mineralfüllstoffs bei einer Temperatur über 180 °C, um ein verstärktes Polyvinylchloridpolymer zu erhalten,

c) Granulierens des in Schritt b) erhaltenen verstärkten Polyvinylchloridpolymers,

d) Mischens des in Schritt c) erhaltenen Granulats mit 0,1 Gew.-% bis 5 Gew.-% eines Schäummittels und Drückens dieser Mischung durch eine Düse bei einer Temperatur über 180 °C, um das geschäumte Profil zu erhalten, wobei die Gesamtmenge an natürlich vorkommendem Mineralfüllstoff (A + B) zu der Menge an Polyvinylchloridpolymer zwischen 0,8 und 1,2, auf das Gewicht bezogen, liegt;

mit der Maßgabe, dass das Profil keine Glasfasern umfasst.

11. Verfahren nach irgendeinem der Ansprüche 8-10, **dadurch gekennzeichnet, dass** die Menge A zwischen 2 und 25 oder zwischen 25 und 40 Teilen pro hundert Teilen des Polyvinylchloridpolymers (phr) liegt.

12. Verfahren nach irgendeinem der Ansprüche 8-11, ferner den Schritt des Zusetzens eines Verarbeitungshilfsmittels in einer Menge zwischen 5 und 15 Gew.-% umfassend.

13. Verfahren nach irgendeinem der Ansprüche 8-12, ferner den Schritt des Zusetzens eines Wärmestabilisators in einer Menge zwischen 1 und 4 Gew.-%, am bevorzugtest etwa 4 Gew.-% umfassend, wobei der Wärmestabilisator bevorzugt in Stabilisator vom geblockten Thioltyp ist.

14. Granulat, das in Schritt c) des Verfahrens nach irgendeinem der Ansprüche 8-13 erhalten wird.

15. Kit von Teilen umfassend in Schritt c) des Verfahrens nach Anspruch 10 erhaltenes Granulat und ein Schäummittel.

16. Verwendung eines Profils nach irgendeinem der Ansprüche 1-7 als Platte, bevorzugt in einem Boden- oder Wandbelag oder Rollladen.

17. Verwendung eines Profils nach Anspruch 16, wobei die Platte an eine Oberfläche wie einen Boden oder eine Wand unter Anwendung eines Nagels, bevorzugt unter Anwendung einer Nagelpistole, befestigt wird.

18. Verwendung eines Profils nach Anspruch 16, wobei die Platte mit einem Schließmechanismus, bevorzugt in Form eines Kreuzversatzes, ausgestattet ist, wobei der Kreuzversatz eine Verbindung zum Zusammenfügen von Profilen bildet.

**Revendications**

1. Profilé constitué de polymère de poly(chlorure de vinyle) expansé comprenant 80 à 120 parties en poids de charge minérale d'origine naturelle par 100 parties en poids de poly(chlorure de vinyle) (PVC), et PVC ayant une valeur K de 50 à 58, à condition que le profilé ne comprenne pas des fibres de verre.

**2.** Profilé selon la revendication 1, dans lequel ladite charge minérale d'origine naturelle est choisie parmi un groupe comprenant la wollastonite, la vermiculite, le talc, le mica et/ou des combinaisons de ceux-ci.

**3.** Profilé selon la revendication 1 ou 2, dans lequel ladite charge minérale d'origine naturelle est le talc et/ou le mica.

**4.** Profilé selon la revendication 3, dans lequel ladite charge minérale d'origine naturelle a une taille de grain moyenne comprise entre 0,5 et 50 $\mu$m ; ledit talc a de préférence une taille de grain moyenne d50 comprise entre 0,5 et 5 $\mu$m et ledit mica a une taille de grain moyenne d50 comprise entre 30 et 35 $\mu$m.

**5.** Profilé selon l'une quelconque des revendications 1 à 4, ayant un coefficient de dilatation thermique linéaire (CLTE) inférieur à 25 x $10^{-6}$ mm/mm/K, de préférence inférieur à 15 x $10^{-6}$ mm/mm/K.

**6.** Profilé selon l'une quelconque des revendications 1 à 5, ledit profilé ayant une masse volumique, exprimée en kg/l, inférieure à 1,0, de préférence comprise entre 0,6 et 0,8, plus préférablement d'environ 0,6.

**7.** Profilé selon l'une quelconque des revendications 1 à 6, ledit profilé étant pourvu d'un corps externe non expansé et d'un corps interne expansé.

**8.** Procédé d'obtention d'un profilé constitué de polymère expansé de poly(chlorure de vinyle) comprenant une charge minérale d'origine naturelle et du PVC ayant une valeur K de 50 à 58, comprenant les étapes de :

a) préparation d'un polymère prérenforcé par mélange de polymère de poly(chlorure de vinyle) avec une quantité A d'une charge minérale d'origine naturelle et avec une quantité comprise entre 0,1 % en poids et 5 % en poids d'un agent moussant, à une température inférieure à la température de fusion du polymère de poly(chlorure de vinyle),
b) mélange du polymère prérenforcé obtenu dans a) avec une quantité B d'une charge minérale d'origine naturelle à une température supérieure à 180 °C pour obtenir un polymère de poly(chlorure de vinyle) renforcé,
c) facultativement, granulation du polymère de poly(chlorure de vinyle) renforcé obtenu dans l'étape b),
d) pressage du polymère renforcé obtenu dans l'étape b) ou du granulé obtenu dans l'étape c) à travers une filière pour obtenir ledit profilé expansé ;

dans lequel la quantité totale de charge minérale d'origine naturelle (A+B) par rapport à la quantité de polymère de poly(chlorure de vinyle) est comprise entre 0,8 et 1,2 en poids ;
à condition que le profilé ne comprenne pas des fibres de verre.

**9.** Procédé d'obtention d'un profilé constitué de polymère expansé de poly(chlorure de vinyle) comprenant une charge minérale d'origine naturelle et du PVC ayant une valeur K de 50 à 58, comprenant les étapes de :

a) préparation d'un polymère prérenforcé par mélange du polymère de poly(chlorure de vinyle) avec une quantité A d'une charge minérale d'origine naturelle à une température inférieure à la température de fusion du polymère de poly(chlorure de vinyle),
b) mélange du polymère prérenforcé obtenu dans a) avec une quantité B d'une charge minérale d'origine naturelle et avec une quantité comprise entre 0,1 % en poids et 5 % en poids d'un agent moussant, à une température supérieure à 180 °C pour obtenir un polymère de poly(chlorure de vinyle) renforcé,
c) facultativement, la granulation du polymère de poly(chlorure de vinyle) renforcé obtenu dans l'étape b),
d) le pressage du polymère renforcé obtenu dans l'étape b) ou du granulé obtenu dans l'étape c) à travers une filière pour obtenir ledit profilé expansé ;

dans lequel la quantité totale de charge minérale d'origine naturelle (A+B) par rapport à la quantité de polymère de poly(chlorure de vinyle) est comprise entre 0,8 et 1,2 en poids ;
à condition que le profilé ne comprenne pas des fibres de verre.

**10.** Procédé d'obtention d'un profilé constitué de polymère expansé de poly(chlorure de vinyle) comprenant une charge minérale d'origine naturelle et du PVC ayant une valeur K de 50 à 58, comprenant les étapes de :

a) préparation d'un polymère prérenforcé par mélange de polymère de poly(chlorure de vinyle) avec une quantité A d'une charge minérale d'origine naturelle à une température inférieure à la température de fusion du polymère de poly(chlorure de vinyle),

b) mélange du polymère prérenforcé obtenu dans a) avec une quantité B d'une charge minérale d'origine naturelle à une température supérieure à 180 °C pour obtenir un polymère de poly(chlorure de vinyle) renforcé,

c) granulation du polymère de poly(chlorure de vinyle) renforcé obtenu dans l'étape b),

d) mélange du granulé obtenu dans l'étape c) avec une quantité comprise entre 0,1 % en poids et 5 % en poids d'un agent moussant, et pressage de ce mélange à travers une filière à une température supérieure à 180 °C pour obtenir ledit profilé expansé

dans lequel la quantité totale de charge minérale d'origine naturelle (A+B) par rapport à la quantité de polymère de poly(chlorure de vinyle) est comprise entre 0,8 et 1,2 en poids ;

à condition que le profilé ne comprenne pas des fibres de verre.

11. Procédé selon l'une quelconque des revendications 8 à 10, **caractérisé en ce que** ladite quantité A est comprise entre 2 et 25 ou entre 25 et 40 parties par cent parties du polymère de poly(chlorure de vinyle) (phr).

12. Procédé selon l'une quelconque des revendications 8 à 11, comprenant en outre l'étape d'ajout d'un adjuvant de traitement en une quantité comprise entre 5 et 15 % en poids.

13. Procédé selon l'une quelconque des revendications 8 à 12, comprenant en outre l'étape d'ajout d'un stabilisant thermique en une quantité comprise entre 1 et 4 % en poids ; de manière préférée entre toutes d'environ 4 % en poids, dans lequel ledit stabilisant thermique est, de préférence, un stabilisant de type thiol bloqué.

14. Granulé obtenu dans l'étape c) du procédé selon l'une quelconque des revendications 8 à 13.

15. Kit de composants comprenant le granulé obtenu dans l'étape c) du procédé selon la revendication 10 et un agent moussant.

16. Utilisation d'un profilé selon l'une quelconque des revendications 1 à 7 en tant que panneau, de préférence dans un plancher ou un revêtement de sol ou un volet.

17. Utilisation d'un profilé selon la revendication 16, dans laquelle ledit panneau est fixé à une surface telle qu'un plancher ou une paroi au moyen d'un clou, de préférence au moyen d'une cloueuse.

18. Utilisation d'un profilé selon la revendication 16, dans laquelle ledit panneau est pourvu d'un mécanisme de fermeture, de préférence sous la forme d'une languette et d'une rainure, la languette et la rainure constituent un raccordement pour assembler des profilés conjointement.

## REFERENCES CITED IN THE DESCRIPTION

**Patent documents cited in the description**

- US 20070078191 A

**Non-patent literature cited in the description**

- PVC Handbook. Hanser Gardner, 2005